(19) Europäisches Patentamt / European Patent Office / Office européen des brevets

(11) **EP 4 083 295 B1**

(12) **EUROPEAN PATENT SPECIFICATION**

(45) Date of publication and mention
of the grant of the patent:
**03.06.2026 Bulletin 2026/23**

(21) Application number: **20905463.4**

(22) Date of filing: **23.12.2020**

(51) International Patent Classification (IPC):
**D04H 3/147** (2012.01)    **B01D 39/16** (2006.01)
**D04H 3/011** (2012.01)

(52) Cooperative Patent Classification (CPC):
**D04H 3/147; B01D 39/163; B01D 39/1692;**
**B01D 63/14; B01D 67/00042; B01D 69/02;**
**B01D 69/1071; B01D 69/1213; D04H 3/011;**
B01D 46/521; B01D 46/71; B01D 2239/0233;
B01D 2239/0407; B01D 2239/0421;
B01D 2239/0442;                           (Cont.)

(86) International application number:
**PCT/JP2020/048302**

(87) International publication number:
**WO 2021/132402 (01.07.2021 Gazette 2021/26)**

(54) **SPUNBOND NON-WOVEN FABRIC, FILTER LAMINATED FILTER MATERIAL, FILTER MATERIAL FOR PLEATED FILTER FOR DUST COLLECTOR, PLEATED FILTER FOR DUST COLLECTOR, AND MEDIUM AIR VOLUME PULSE-JET TYPE DUST COLLECTOR**

SPINNVLIESSTOFF, FILTERLAMINATFILTERMATERIAL, FILTERMATERIAL FÜR FALTENFILTER EINES STAUBABSCHEIDERS, FALTENFILTER FÜR STAUBABSCHEIDER UND STAUBSAMMLER VOM PULS-JET-TYP MIT MITTLEREM LUFTVOLUMEN

NON-TISSÉ FILÉ-LIÉ, MATÉRIAU FILTRANT À STRATIFIÉ DE FILTRE, MATÉRIAU FILTRANT POUR FILTRE PLISSÉ DE COLLECTEUR DE POUSSIÈRE, FILTRE PLISSÉ DE COLLECTEUR DE POUSSIÈRE ET COLLECTEUR DE POUSSIÈRE DE TYPE À JET D'IMPULSION À VOLUME D'AIR MOYEN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2019 JP 2019232127**

(43) Date of publication of application:
**02.11.2022 Bulletin 2022/44**

(73) Proprietor: **Toray Industries, Inc.**
**Tokyo 103-8666 (JP)**

(72) Inventors:
• **IKEJIRI, Yuki**
**Otsu-shi, Shiga 520-8558 (JP)**
• **YOSHIDA, Jun**
**Otsu-shi, Shiga 520-8558 (JP)**
• **KITAMURA, Koji**
**Otsu-shi, Shiga 520-8558 (JP)**

(74) Representative: **Mewburn Ellis LLP**
**Aurora Building**
**Counterslip**
**Bristol BS1 6BX (GB)**

(56) References cited:
WO-A1-97/37071          JP-A- 2017 127 832
JP-A- H09 192 426       JP-A- H09 192 426

(52) Cooperative Patent Classification (CPC): (Cont.)
B01D 2239/0627; B01D 2239/0654;
B01D 2239/0668; B01D 2239/069; B01D 2239/10;
B01D 2239/1233; B01D 2239/1258;
B01D 2239/1291; B01D 2323/39; B01D 2325/20;
B01D 2325/24; Y02A 50/2351

**Description**

Field

The present invention relates to a spunbond non-woven fabric, a filter laminated filter material, a filter material for a pleated filter for a dust collector, a pleated filter for a dust collector, and a medium air volume pulse-jet type dust collector having excellent rigidity, durability, and post-processing.

Background

Dust collectors are conventionally used in order to remove and collect dust in work environments where dust is generated, and, among the dust collectors, a pulse-jet type dust collector that can reduce the frequency of filter replacement has been known. In this pulse-jet type dust collector, the outside of the filter is the filtration surface, and the dust collector is operated with the filter attached to a filter gauge. The pulse-jet type dust collector has a mechanism that enables backwashing, in which compressed air is sent inside the filter when the pressure of the filter reaches a certain pressure. The backwashing allows dust accumulated on the outer surface of the filter to be brushed off and the filter to be repeatedly used. The filter for this pulse-jet type dust collector has been known to be used in a pleated folded shape, which allows a filtration area to be significantly increased, pressure drop to be reduced, and collection efficiency to be enhanced by forming the pleated shape. In addition, in order to improve various properties such as high collection performance, heat resistance, chemical resistance, and low-energy cleaning and to achieve high performance, as the filter of this pulse-jet type dust collector, a laminated filter material made by laminating a porous membrane made of polytetrafluoroethylene (hereinafter may be referred to as "PTFE") and a non-woven fabric is generally used.

Of the non-woven fabrics used as materials for the filters for such dust collectors, spunbond non-woven fabrics in particular are used as filters for home and office air conditioners and industrial dust collectors because the filters have excellent lint-free properties and are easy to obtain excellent strength performance compared to staple fiber non-woven fabrics.

As the spunbond non-woven fabrics used for filters in dust collector, for example, Patent Literature 1 and Patent Literature 2 have disclosed non-woven fabrics made by previously heating and bonding a thermoplastic continuous filament with a pair of flat rolls and thereafter partially bonding the resultant product with a pair of engraved embossing rolls. In addition, Patent Literature 3 has disclosed non-woven fabrics made by forming a mixed fiber made of a thermoplastic continuous filament of a high melting point component and a thermoplastic continuous filament of a low melting point component, and non-woven fabrics made of a composite fiber having a multilobed shape composed of a high melting point component and a low melting point component. Patent Literatures 4 and 5 disclose further non-woven fabrics.

Citation List

Patent Literature

Patent Literature 1: Japanese Patent No. 5422874
Patent Literature 2: Japanese Patent No. 5298803
Patent Literature 3: Japanese Patent No. 4522671
Patent Literature 4: JP 2017-127832 A
Patent Literature 5: JP H09 192426 A

Summary

Technical Problem

A filter for dust collection that processes air at 70 to 250 L/min for pneumatic conveying of powder, collection of powder, and the like in the above pulse-jet type dust collector is repeatedly used by brushing off dust with compressed air or the like from the filter collecting the dust. Therefore, in addition to laminating properties with a PTFE membrane and pleat formation, rigidity is required in order to prevent membrane rupture when dust is brushed off with compressed air or the like. No product satisfying both laminating properties and rigidity, however, has been obtained. In other words, loose bonding between the fibers in order to improve laminating properties results in weak rigidity of the non-woven fabric, leading to deteriorate pleated workability. On the other hand, strong bonding between fibers in order to improve rigidity of the non-woven fabric results in large surface unevenness of the non-woven fabric, leading to deterioration in the laminating properties and peeling or rupture of the PTFE membrane during backwashing. Problems have arisen from these phenomena.

For example, in technologies disclosed in Patent Literatures 1 and 2, the surface unevenness of the non-woven fabric becomes excessively large and thus the laminating properties with the PTFE are inferior. In technology disclosed in Patent Document 3, the non-woven fabric is made of a mixed fiber, the bonding between the fibers at the bonded part is low, the rigidity is inferior, and thus it is difficult to satisfy both sufficient rigidity and laminating properties at the same time.

In view of the above problems, an object of the present invention is to provide a spunbond non-woven fabric, a filter laminated filter material, a filter material for a pleated filter for a dust collector, a pleated filter for a dust collector, and a medium air volume pulse-jet type dust collector having excellent laminating properties with a PTFE membrane and pleated workability and high rigidity.

Solution to Problem

As a result of intensive study for achieving the above object, the inventors of the present invention have found that a spunbond non-woven fabric having excellent lamination processing with a PTFE membrane and pleat formation and satisfying balance among the lamination processing, the pleat formation, and rigidity can be obtained by determining the ratio of the thickness of a projected part to the thickness of a recessed part and the ratio of the distance from the surface of the projected part to the surface of the recessed part obtained from the cross section of the non-woven fabric made of a partially bonded thermoplastic continuous filament within the range of specific values.

The present invention has been attained based on these findings and, according to the present invention, the following inventions are provided.

That is, a spunbond non-woven fabric according to the present invention includes a thermoplastic continuous filament including a high melting point component and a low melting point component, the spunbond non-woven fabric being made by partially being bonded. The spunbond non-woven fabric includes a nonbonded projected part and a bonded recessed part, bending resistance in a machine direction of the spunbond non-woven fabric is 20 mN or more and 40 mN or less, and in a non-woven fabric cross-section, a thickness from one surface to another surface of the projected part is determined to be $t_A$, a thickness from one surface to another surface of the recessed part is determined to be $t_B$, and respective distances from one surface of the projected part to one surface of the recessed part are determined to be $t_C$ and $t_D$ ($t_C < t_D$), and the spunbond non-woven fabric has a relation represented by formulas (1) and (2) below:

$$0.5 \leq 1 - t_B/t_A < 1.0 \qquad\qquad (1)$$

$$0.35 \leq t_C/t_D \leq 0.65 \qquad\qquad (2).$$

In preferred aspects, formula (2) is $0.35 < t_C/t_D \leq 0.65$ and further preferably formula (2) is $0.35 < t_C/t_D < 0.65$.

According to a preferable aspect of the spunbond non-woven fabric of the present invention, a CV value of a basis weight is 5% or less.

According to a preferable aspect of the spunbond non-woven fabric of the present invention, a ratio of a bonding area of the recessed part is 5% or more and 20% or less.

According to a preferable aspect of the spunbond non-woven fabric of the present invention, an average single fiber diameter of the thermoplastic continuous filament is 12 $\mu$m or more and 26 $\mu$m or less.

The spunbond non-woven fabric of the present invention is used as a filter laminated filter material by laminating a PTFE membrane to the spunbond non-woven fabric.

The filter laminated filter material of the present invention is used as a filter material for a pleated filter for a dust collector.

The filter material for a pleated filter for a dust collector of the present invention is used as a pleated filter for a dust collector.

The pleated filter for a dust collector of the present invention is used as a medium air volume pulse-jet type dust collector.

Advantageous Effects of Invention

According to the present invention, a spunbond non-woven fabric having excellent laminating properties with a PTFE membrane and pleated workability and having high rigidity can be obtained.

Brief Description of Drawings

FIG. 1 is a cross-sectional photograph of a spunbond non-woven fabric according to one embodiment of the present invention.

FIG. 2 is a schematic perspective view of one example of a filtering material for a pleated filter for a dust collector according to the present invention.

FIG. 3 is a view illustrating the configuration of a test system for conducting a collection performance test according to Example of the present invention.

Description of Embodiments

Hereinafter, embodiments for implementing the present invention will be described in detail. The present invention, however, is not limited by the following embodiments but is defined by the claims.

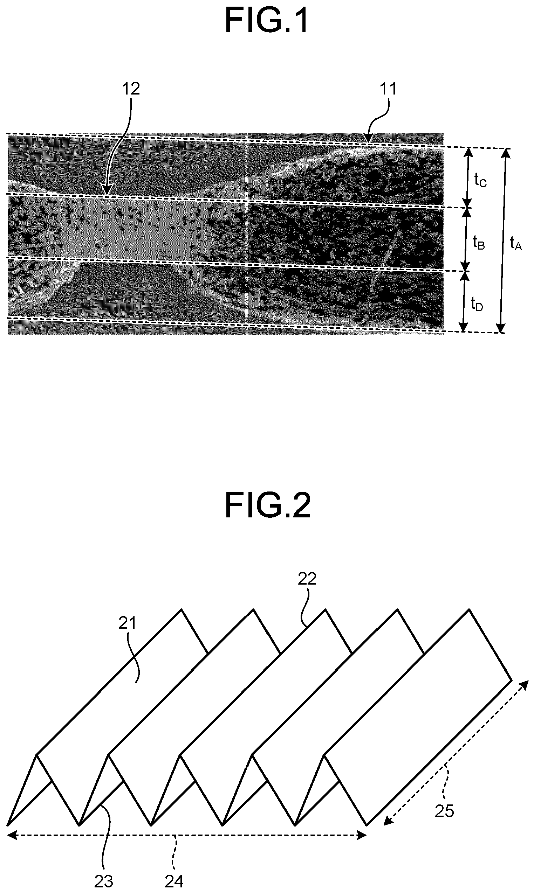

The spunbond non-woven fabric according to the present invention is a non-woven fabric made of a thermoplastic continuous filament. The thermoplastic continuous filament is composed of a high melting point component and a low melting point component. FIG. 1 is a cross-sectional photograph of the spunbond non-woven fabric according to one embodiment of the present invention. The spunbond non-woven fabric illustrated in FIG. 1 allows air to pass from the upper side to the lower side at the time of use. The spunbond non-woven fabric is partially bonded and the bending resistance of the above non-woven fabric in a machine direction (MD) is 20 mN or more and 40 mN or less. The spunbond non-woven fabric has a non-bonded projected part 11 (non-bonded part) and a bonded recessed part 12 (bonded part) and is a spunbond non-woven fabric having a relation represented by the following formula, where the thickness from one surface of the projected part to the other surface, the thickness from one surface of the recessed part to the other surface, and the distances from one surface of the projected part to one surface of the recessed part are determined to be $(t_A)$, $(t_B)$, $(t_C)$, and $(t_D)$, respectively $(t_C < t_D)$.

$$0.5 \le 1 - t_B/t_A < 1.0 \qquad (1)$$

$$0.35 \le t_C/t_D \le 0.65 \qquad (2)$$

In the present invention, the machine direction refers to a sheet transport direction during the production of the spunbond non-woven fabric, that is, a winding direction with respect to a non-woven fabric roll and the transverse direction (TD) described below refers to a direction that perpendicularly intersects with the sheet transport direction, that is, the winding direction with respect to the non-woven fabric roll. In the case where the spunbond non-woven fabric is not in a rolled state, for example, in the case where the spunbond non-woven fabric is cut, the machine direction and the transverse direction are determined by the following procedures.

(a) One direction is arbitrarily determined in the face of the spunbond non-woven fabric and a test specimen having a length of 38.1 mm and a width of 25.4 mm is collected along this direction.

(b) In the same manner, test specimens having a length of 38.1 mm and a width of 25.4 mm in the directions rotated at 30 degrees, 60 degrees, and 90 degrees from the direction in which the test specimen is collected are collected.

(c) The bending resistance of each of the test specimens in each direction is measured in accordance with the method for measuring the bending resistance of spunbond non-woven fabrics described below.

(d) The direction indicating the highest value obtained by the measurement is determined to be the machine direction of the spunbond non-woven fabric and the direction perpendicular to the machine direction is determined to be the transverse direction.

The spunbond non-woven fabric according to the present invention is also used for a filter, for example, a filter material for a pleated filter for a duct collector. FIG. 2 is a schematic perspective view of one example of a filter material for a pleated filter for a dust collector. A filter material 21 for a pleated filter for a dust collector illustrated in FIG. 2 has a mountain section 22 and a valley section 23 formed by folding over the spunbond non-woven fabric. When the machine direction and the transverse direction are determined from the filter material for a pleated filter for a dust collector and the like, in the case of a filter material for a pleated filter for a dust collector as illustrated in FIG. 2, the direction parallel to the ridge of the mountain section 22 (dashed arrow 25) is determined to be the transverse direction and the direction perpendicular to the transverse direction (dashed arrow 24) is determined to be the machine direction.

(Thermoplastic continuous filament)

As a thermoplastic resin serving as a raw material for the thermoplastic continuous filament that constitutes the spunbond non-woven fabric according to the present invention, polyester is particularly preferably used. Polyester is a macromolecular polymer composed of an acid component and an alcohol component as monomers. As the acid component, for example, aromatic carboxylic acids such as phthalic acid (ortho form), isophthalic acid, and terephthalic acid, aliphatic dicarboxylic acids such as adipic acid and sebacic acid, and alicyclic dicarboxylic acids such as cyclohexane carboxylic acid may be used. As the alcohol component, for example, ethylene glycol, diethylene glycol, and polyethylene glycol may be used.

Examples of the polyester include polyethylene terephthalate (PET), polybutylene terephthalate (PBT), polytrimethylene terephthalate (PTT), polyethylene naphthalate, polylactic acid, and polybutylene succinate. As the polyester used as the high melting point polymer described below, PET, which has a high melting point, excellent heat resistance, and high rigidity, is most preferably used.

Additives such as nucleating agents, matting agents, pigments, antifungal agents, antimicrobial agents, flame retardants, metal oxides, aliphatic bisamides and/or aliphatic monoamides, and hydrophilic agents may be added to these polyester raw materials to the extent that the effects of the present invention are not impaired. Of these additives, the metal oxides such as titanium dioxide have effects of improving spinnability by reducing surface friction of the fiber and preventing bonding of fibers to each other, and improving the bonding properties of the non-woven fabric by increasing thermal conductivity during bonding molding of the non-woven fabric using hot rolls. The aliphatic bisamides such as ethylene bis-stearamide and/or alkyl-substituted aliphatic monoamides also have effects of enhancing the mold release properties between the hot rolls and the non-woven fabric web and improving transportability.

Subsequently, the thermoplastic continuous filament that constitutes the spunbond non-woven fabric according to the present invention is composed of a high melting point component and a low melting point component. The thermoplastic continuous filament is preferably an aspect of a composite filament formed by arranging a polyester-based low melting point polymer serving as the low melting point component having a melting point 10°C or more and 140°C or less lower than the melting point of the polyester-based high melting point polymer around the polyester-based high melting point polymer serving as the high melting point component. By performing the above treatment, the composite polyester fiber (filament) constituting the spunbond non-woven fabric is strongly bonded to each other when the spunbond non-woven fabric is formed by bonding, and thus the spunbond non-woven fabric has excellent mechanical strength and can sufficiently withstand dust processing under high air volumes.

In the present invention, the melting point of thermoplastic resin is measured using a differential scanning calorimeter (for example, "DSC-2", manufactured by Perkin Elmer Japan Co., Ltd.) under conditions of a temperature increase rate of 20°C/min and a measurement temperature range of 30°C to 300°C and a temperature providing an extremum in the obtained melting endothermic curve is determined to be the melting point of the thermoplastic resin. With respect to a resin that does not indicate an extremum in the melting endothermic curve in the differential scanning calorimeter, a temperature at which the resin melts under microscopic observation during heating on a hot plate is determined to be the melting point.

In the case where the thermoplastic resin is the polyester, examples of the combination of the polyester-based high melting point polymer and the polyester-based low melting point polymer (hereinafter may be described in the order of the polyester-based high melting point polymer/polyester-based low melting point polymer) may include PET/PBT, PET/PTT, PET/polylactic acid, and PET/copolymer PET. Of these combinations, the combination of PET/copolymer PET is preferably used because of excellent spinnability. As a copolymer component of the copolymer PET, isophthalic acid-copolymer PET is preferably used because of excellent spinnability in particular.

With respect to the composite form of the composite filament, for example, a concentric core-sheath type form, an eccentric core-sheath type form, and a sea-island type form may be exemplified. Of these shapes, the concentric core-sheath type composite filament is preferable because this filament can be uniformly and strongly bonded to each other. Furthermore, examples of the cross-sectional shape of the composite filament include a circular cross-section, a flat cross-section, a polygonal cross-section, a multilobed cross-section, and a hollow cross-section. Of these filaments, as a preferable aspect, the filament having the circular cross-sectional shape as the cross-sectional shape of the filament is used.

As the form of the above composite filament, for example, a method for forming the mixed fiber from the fiber made of the polyester-based high melting point polymer and the fiber made of the polyester-based low melting point polymer may be exemplified. In the case of the method for forming the mixed fiber, however, uniform bonding is difficult. For example, bonding is weak in a region where the fiber made of the polyester-based high melting point polymer is densely gathered and thus the mechanical strength and the rigidity are inferior, resulting in an unsuitable composite filament for the spunbond non-woven fabric. On the other hand, a method for imparting a low melting point polymer to the fiber made of the polyester-based high melting point polymer by dipping or spraying is exemplified. However, both methods have difficulty to uniformly impart the low melting point polymer onto the surface layer and in the thickness direction. Consequently, the composite filament has inferior mechanical strength and rigidity, and thus is not preferable for the spunbond non-woven fabric.

The melting point of the polyester-based low melting point polymer in the present invention is preferably 10°C or more and 140°C or less lower than the melting point of the polyester-based high melting point polymer. Setting the melting point to 10°C or more, preferably 20°C or more, and more preferably 30°C or more lower allows moderate bonding properties to be obtained in the spunbond non-woven fabric. On the other hand, setting the melting point of the polyester-based low melting point polymer to 140°C or less, preferably 120°C or less, and more preferably 100°C or less lower than the melting point of the polyester-based high melting point polymer allows deterioration in the heat resistance of the spunbond non-woven fabric to be reduced.

The melting point of the polyester-based high melting point polymer is preferably in the range of 200°C or more and 320°C or less. Setting the melting point of polyester-based high melting point polymer to preferably 200°C or more, more preferably 210°C or more, and further preferably 220°C or more allows a filter having excellent heat resistance to be obtained. On the other hand, setting the melting point of polyester-based high melting point polymer to preferably 320°C or less, more preferably 300°C or less, and further preferably 280°C or less allows the consumption of large amounts of thermal energy in order to melt the material during non-woven fabric production and decrease in productivity to be reduced.

The melting point of the polyester-based low melting point polymer is preferably in the range of 160°C or more and 250°C or less. Setting the melting point of the polyester-based low melting point polymer to preferably 160°C or more, more preferably 170°C or more, and further preferably 180°C or more allows excellent shape retention to be provided even after passing through a step in which heat is applied during pleated filter production such as heat setting during pleat formation. On the other hand, setting the melting point of the polyester-based low melting point polymer to preferably 250°C or less and more preferably 240°C or less allows a filter having excellent bonding properties during non-woven fabric production and excellent mechanical strength to be obtained.

The aspect of the content ratio of the polyester-based high melting point polymer to the polyester-based low melting point polymer is preferably in the range of 90:10 to 60:40, and more preferably in the range of 85:15 to 70:30 in a mass ratio. Setting the content of the polyester-based high melting point polymer to 60% by mass or more and 90% by mass or less allows the rigidity and heat resistance of the spunbond non-woven fabric to be excellent. On the other hand, setting the content of the low melting point polyester to 10% by mass or more and 40% by mass or less allows the composite polyester fiber (filament) that constitutes the spunbond non-woven fabric to be strongly bonded to each other when the spunbond non-woven fabric is formed by bonding and used, resulting in excellent mechanical strength and sufficient resistance to dust collection under medium air volume.

Examples of the composite form of the composite polyester fiber include a concentric core-sheath type form, an eccentric core-sheath type form, and a sea-island type form. Of these forms, the concentric core-sheath type form is preferable because the filament can be uniformly and strongly bonded to each other. Furthermore, examples of the cross-sectional shape of the filament (single fiber) include shapes of a circular cross-section, a flat cross-section, a polygonal cross-section, a multilobed cross-section, and a hollow cross-section. Of these cross-sectional shapes, the circular cross-sectional shape of the filament (single fiber) is a preferable aspect.

The average single fiber diameter of the thermoplastic continuous filament constituting the spunbond non-woven fabric according to the present invention is preferably in the range of 12 $\mu$m or more and 26 $\mu$m or less. Setting the average single fiber diameter of the thermoplastic continuous filament to 12 $\mu$m or more, preferably 13 $\mu$m or more, and more preferably 14 $\mu$m or more allows the air permeability of the spunbond non-woven fabric to be improved and pressure drop to be reduced. This setting also allows the number of thread breakages when the thermoplastic continuous filament is formed to be decreased and stability during production to be improved. On the other hand, setting the average single fiber diameter of thermoplastic continuous filament to 26 $\mu$m or less, preferably 25 $\mu$m or less, and more preferably 24 $\mu$m or less allows the uniformity of the spunbond non-woven fabric to be improved to form a dense non-woven fabric surface, resulting in improving collection performance, for example, in which dust can be easily filtrated at the surface layer.

In the present invention, as the average single fiber diameter ($\mu$m) of spunbond non-woven fabric, the value obtained by the following method is determined to be employed.

(i) Ten small samples are randomly collected from the spunbond non-woven fabric.
(ii) Photographs in which the thickness of the fibers can be measured in the range of 500 to 2,000 times at the surface of the collected small sample are taken using a scanning electron microscope or other means.
(iii) Ten fibers from each photograph taken from each of the small samples, that is, 100 fibers in total are arbitrarily selected and the thicknesses of the selected fibers are measured. The fibers are assumed to have a circular cross section and the thickness is determined to be the fiber diameter.
(iv) A value is calculated by rounding off the arithmetic mean value of those values to an integer and this value is determined to be the average single fiber diameter.

(Method of producing spunbond non-woven fabric)

Subsequently, the spunbond non-woven fabric according to the present invention and the method for producing the same will be described. The spunbond non-woven fabric according to the present invention is produced by sequentially performing steps (a) to (c) described below.

(a) A step of melt-extruding the thermoplastic polymer from a spinning spinnerret, and thereafter pulling and stretching the extruded products by an air-sucker to obtain the thermoplastic continuous filament.
(b) A step of opening the obtained filament and forming a fiber web by depositing the opened filament on a moving net conveyor.
(c) A step of partially bonding the obtained fiber web.

Each of the above steps will be described in more detail below.

(a) Thermoplastic continuous filament formation step

First, the thermoplastic polymer is melt-extruded from the spinning spinnerret. In particular, in the case where the composite filament in which the polyester-based low melting point polymer having a lower melting point than the melting point of the polyester-based high melting point polymer is arranged around the polyester-based high melting point polymer is used as the thermoplastic continuous filament, as the composite filament in which each of the polyester-based high melting point polymer and the polyester-based low melting point polymer is melted at the respective melting points or more and (melting point + 70°C) or less and a polyester-based low melting point polymer having a melting point of 10°C or more and 140°C or less lower than the melting point of the polyester-based high melting point polymer is arranged around the polyester-based high melting point polymer, a filament having a circular cross-sectional shape is spun by spinning the melted polymers from fine holes of a spinning spinnerret having a spinnerret temperature of the melting point or more and (melting point + 70°C) or less and thereafter pulling and stretching the spun material by an air-sucker at a spinning speed of 4,000 m/minute or more and 6,000 m/minute or less.

(b) Fiber web forming step

The spunbond non-woven fabric according to the present invention has a step of opening and jetting the spun thermoplastic continuous filament and thereafter depositing the thermoplastic continuous filament on a moving net conveyor to obtain a fiber web. For example, as the opening method, a method of opening fibers by applying electrically charged opening or by using an opening plate is exemplified. In particular, the method using the opening plate is preferable. Use of the opening plate allows the uniformity of the non-woven fabric to be improved and excellent filter performance to be provided.
Even in the case where the composite polyester fiber is used, it is important that the spunbond non-woven fabric is made of the above filament (long fiber). By performing the above treatment, the rigidity and mechanical strength can be improved compared to the case of a staple fiber non-woven fabric composed of a non-continuous fiber and thus the spunbond non-woven fabric can be preferable as the pleated filter.
In the method of producing the spunbond non-woven fabric according to the present invention, temporarily bonding the fiber web collected on the net conveyor is also a preferable aspect. As the temporary bonding, a method of bonding the collected fiber web by a pair of flat rolls or a method of installing a flat roll on the net conveyor and bonding the fiber web between the net conveyor and the flat roll is preferably used. Bonding by flat rolls is preferably performed by setting the fiber web along calender rolls made of flat rolls in an S-shape. By performing the above treatment, the thickness of the non-woven fabric can be secured and a filter having high air permeability can be obtained.
The linear pressure for temporary bonding is preferably 30 kg/cm or more and 70 kg/cm or less. Setting the linear pressure for the temporary bonding to 30 kg/cm or more and more preferably 40 kg/cm or more allows the strength necessary for pleated workability to be provided to the non-woven fabric when the temporarily bonded fiber web is used as the spunbond non-woven fabric. Setting the linear pressure for bonding to 70 kg/cm or less and more preferably 60 kg/cm or less allows a moderate thickness to be provided and air permeability as a filter to be secured.
The temperature for the temporary bonding is preferably a temperature of 70°C or more and 120°C or less lower than the melting point of the polyester-based low melting point polymer. Setting the temperature as described above allows conveying properties to be improved without excessive bonding between fibers to each other.

(c) Partial bonding step

The spunbond non-woven fabric according to the present invention is partially bonded. A method of partially bonding, however, is not particularly limited. Here, a part where the spunbond non-woven fabric is bonded is referred to as a bonded part and a part where the spunbond non-woven fabric is not bonded other than the bonded part is referred to as a non-bonded part. Bonding by hot embossing rolls or by a combination of ultrasonic oscillator and embossing rolls is preferable. In particular, bonding by hot embossing rolls is most preferable from the viewpoint of improving the strength of the non-woven fabric. The partial bonding step is preferably continuously processed from the above web forming step. Continuous processing from the above web forming step allows the density of the bonded part to be increased and thus a non-woven fabric having stiffness strength, which provides excellent pleated formability, to be obtained as the spunbond non-woven fabric. The temperature of the bonding by the hot embossing rolls is preferably a temperature of 5°C or more and 60°C or less lower and more preferably 10°C or more and 50°C or less lower than the melting point of the polymer having the lowest melting point existing on the fiber surface of the non-woven fabric. Setting the temperature difference between the melting point of the polymer having the lowest melting point on the fiber surface of the non-woven fabric and the temperature of the bonding by the hot embossing rolls to 5°C or more and more preferably 10°C or more allows excessive bonding to be prevented. On the other hand, setting the temperature difference between the melting point and the temperature of the bonding to 60°C or less and more preferably 50°C or less allows uniform bonding to be achieved in the non-woven fabric.

The linear pressure for bonding is preferably 30 kg/cm or more and 90 kg/cm or less. Setting the linear pressure for bonding to 30 kg/cm or more and more preferably 40 kg/cm or more allows the strength necessary for pleated workability to be provided to the non-woven fabric when the product is used as the spunbond non-woven fabric. Setting the linear pressure for bonding to 90 kg/cm or less and more preferably 80 kg/cm or less allows excessive bonding to be prevented.

The ratio of a bonding area having partial bonding of the spunbond non-woven fabric according to the present invention (hereinafter simply described as a bonding area ratio) is the ratio of the bonded part (recessed part) to the total area of the non-woven fabric and a preferable range is 5% or more and 20% or less relative to the total area of the non-woven fabric. A bonding area ratio of 5% or more, more preferably 6% or more, and further preferably 8% or more allows the mechanical strength of the non-woven fabric to be sufficiently obtained and, in addition, the surface to be less likely to fluff. On the other hand, a bonding area ratio of 20% or less, more preferably 19.5% or less, and further preferably 19% or less allows collection performance not to be deteriorated because the inter-fiber voids are not reduced and thus the pressure drop is not increased.

For measuring the bonding area ratio of the spunbond non-woven fabric, a digital microscope (for example, "VHX-5000", manufactured by Keyence Corporation) is used. The bonding area ratio (%) is determined by collecting 100 rectangular frames having a size of 1.0 cm × 1.0 cm in parallel with the machine direction and the transverse direction from arbitrarily parts of the spunbond non-woven fabric under a magnification of the microscope of 20 times, with respect to each of the 100 rectangular frames, determining an average value by measuring the areas of the bonded part in the rectangular frame relative to the areas of the rectangular frame, and rounding the average value to an integer in percentage. In the case where the bonding area ratio is not represented as a percentage, the bonding area ratio can be calculated by dividing the area of the bonded part ($cm^2$) within the above rectangular frame by 1.0 $cm^2$, which is the area of the rectangular frame, and thereafter rounding off the obtained value to the second decimal place.

The bonded part forms a dent, which is formed by bonding the thermoplastic continuous filament that constitutes the non-woven fabric to each other by heat and pressure. In other words, the part where the thermoplastic continuous filament is bonded and agglomerated compared to other parts is the bonded part. In the case where bonding by hot embossing rolls is employed as the method of bonding, a part where the thermoplastic continuous filament is bonded and agglomerated by the projected part in the embossing rolls is the bonded part. For example, in the case where a roll having a predetermined pattern of unevenness is used only on the upper side or the lower side and a flat roll having no unevenness is used for another roll, the bonded part refers to a part where the thermoplastic continuous filament of the non-woven fabric is bonded to each other by the projected part of the roll having the unevenness and the flat roll. For example, in the case where embossing rolls made of a pair of an upper roll and a lower roll having a plurality of parallelly arranged linear grooves on the surface of the roll and providing the grooves so that the grooves of the upper roll and the grooves of the lower roll intersect at a certain angle are used, the bonded part refers to a part where the thermoplastic continuous filament of the non-woven fabric is agglomerated by bonding the thermoplastic continuous filament between the projected part of the upper roll and the projected part of the lower roll. In this case, a part bonded between the upper projected part and the lower recessed part or the upper recessed part and the lower projected part is not included in the bonded part described here.

As the area per bonded part, an area of 0.3 $mm^2$ or more and 5.0 $mm^2$ or less is preferable. Setting the area to 0.3 $mm^2$ or more allows sufficient mechanical strength to be obtained as the spunbond non-woven fabric and fluffiness on the surface of the non-woven fabric to be reduced. Setting the area to 5.0 $mm^2$ or less allows the air permeability to be retained in addition to the mechanical strength as the spunbond non-woven fabric and thus sufficient collection performance to be obtained.

The shape of the bonded part is not particularly specified. In the case where the roll having unevenness of the predetermined pattern is used in the upper side or the lower side alone and a flat roll having no unevenness is used as another roll, or the bonding is performed between the projected part of the upper roll and the projected part of the lower roll in embossing rolls made of a pair of the upper roll and the lower roll having a plurality of parallelly arranged linear grooves on the surfaces of the rolls and providing the grooves so that the grooves of the upper roll and the grooves of the lower roll intersect at a certain angle, the shape of the bonded part may be circular, triangular, rectangular, parallelogram, oval, and rhombic. The arrangement of these bonded parts is not particularly specified and the bonded parts may be regularly arranged at equal intervals, randomly arranged, or arranged in a mixed manner of different shapes. Of these arrangements, arrangement in which the bonded parts are arranged at equal intervals is preferable from the viewpoint of uniformity of the non-woven fabric. Furthermore, from the viewpoint of partial bonding without peeling off the non-woven fabric, a parallelogram-shaped bonded part formed by using the embossing rolls made of a pair of the upper roll and the lower roll having a plurality of parallelly arranged linear grooves on the surfaces of the rolls and providing grooves so that the grooves of the upper roll and the grooves of the lower roll intersect at a certain angle and bonding between the projected part of the upper roll and the projected of the lower roll is preferable.

(Spunbond non-woven fabric)

The spunbond non-woven fabric according to the present invention has a bending resistance of 20 mN or more and 40 mN or less in the machine direction of the non-woven fabric. A bending resistance of 20 mN or more, more preferably 22 mN or more, and further preferably 25 mN or more allows pleat to be formed while the strength and morphological retention of the non-woven fabric are being maintained. On the other hand, a bending resistance of 40 mN or less, preferably 38 mN or less, and further preferably 36 mN or less allows the folding resistance during pleat forming to be relaxed and the mountain-valley shape of the pleat to be sharply finished.

The bending resistance in the present invention is determined to be a value obtained by the following procedures in accordance with JIS L1913: 2010 "Test methods for nonwovens", 6.7 "Bending resistance (JIS method and ISO method)" 6.7.4 "Gurley Method (JIS method)".

(i) Test specimens having a length of 38.1 mm (effective specimen length L of 25.4 mm) and a width d of 25.4 mm are collected from any five positions in a sample. In the present invention, the longitudinal direction of the non-woven fabric is determined to be the machine direction of the sample.

(ii) Each of the collected test specimens is attached to a chuck and the chuck is fixed in alignment with the scale 1-1/2" (1.5 inches = 38.1 mm) on a movable arm A. In this case, 1/2" (0.5 inch = 12.7 mm) of the sample length is overlapped with the chuck by 1/4" (0.25 inch = 6.35 mm) and with the tip of the pendulum by 1/4" (0.25 inch = 6.35 mm) at the free end of the sample. Therefore, the effective test specimen length L for the measurement is a length in which 1/2" (0.5 inch = 12.7 mm) is subtracted from the test specimen length.

(iii) Subsequently, appropriate weights $W_a$, $W_b$, and $W_c$ (g) are attached to the weight attachment holes a, b, and c (mm) at the lower parts from the fulcrum of pendulum B, the movable arm A is rotated at a constant speed, and the scale RG (mgf) is read when the test specimen is detached from the pendulum B. The scale is read at the first decimal place. The weight to be attached in the weight attachment hole can be appropriately selected. The weight is preferably set so that the scale RG indicates 4 to 6.

(iv) Measurements are performed 5 times for each front side and back side of each of the five test specimens, that is, 50 times in total.

(v) The values of the bending resistance are determined from the obtained respective scale RG values in accordance with the following formula (3) by rounding off the calculated values of the bending resistance to the first decimal place. The average value of 50 measurements is rounded off to the first decimal place and the calculated value is determined to be the bending resistance in the machine direction.

$$Br = RG \times (aW_a + bW_b + cW_c) \times \frac{(L - 12.7)^2}{d} \times 3.375 \times 10^{-5} \qquad (3)$$

The spunbond non-woven fabric in the present invention is a spunbond non-woven fabric in which the thickness from one surface to the other surface of the projected part ($t_A$) and the thickness from one surface to the other surface of the recesses part ($t_B$) in the non-woven fabric cross-section have a relation represented by the above formula (1). The spunbond non-woven fabric having the value of the above formula (1) of 0.50 or more, more preferably 0.52 or more, and further preferably 0.54 or more allows the bonding between fibers to be stronger and thus excellent shape retention to be obtained even under high air volume when the spunbond non-woven fabric is used as a pleated filter for a dust collector. On the other hand, the spunbond non-woven fabric having the value of the above formula (1) of 1.00 or less, more preferably 0.90 or less, and further preferably 0.80 or less allows the bonding between fibers to be loose and thus excellent air permeability to be obtained.

The spunbond non-woven fabric in the present invention is a spunbond non-woven fabric having a relation represented by the above formula (2) where the respective distances from one surface of the projected part to one surface of the recessed part are determined to be ($t_C$) and ($t_D$) ($t_C < t_D$). The spunbond non-woven fabric having the value of the above formula (2) of 0.35 or more, more preferably 0.40 or more, and even more preferably 0.45 or more allows the unevenness of the non-woven fabric to be smaller and laminating properties of the PTFE membrane to the non-woven fabric to be excellent. On the other hand, the spunbond non-woven fabric having the value of the above formula (2) of 0.65 or less, more preferably 0.63 or less, and further preferably 0.61 or less allows the bonded part and the non-bonded part to coexist in the non-woven fabric and the spunbond non-woven fabric having well-balanced air permeability and rigidity to be obtained.

In the present invention, as the thickness from one surface to the other surface of the projected part ($t_A$), the thickness from one surface to the other surface of the recessed part ($t_B$), the value of the above formula (1), and the respective distances from one surface of the projected part to one surface of the recessed part ($t_C$) and ($t_D$) ($t_C < t_D$) and the value of the above formula (2) in the present invention, values determined in accordance with the following procedures are determined to be employed.

(i) At any bonded part (recessed part), the intersection of the center line in the machine direction and the center line in the transverse direction is determined to be the center point of the bonded part (recessed part).
(ii) A straight line parallel to the transverse direction passing through the center point of the above bonded part (recessed part) is drawn.
(iii) Straight lines of 1.0 cm are drawn along the machine direction using two points on the straight lines 0.5 cm away from the center point of the above bonded part (recessed part) as the starting points and a straight line connecting the end points of the straight lines is drawn.
(iv) The area surrounded by a 1.0 cm $\times$ 1.0 cm square formed in (i) to (iii) is cut away with a razor blade.
(v) In the same manner, 100 pieces in total of the measurement samples of 1.0 cm $\times$ 1.0 cm are collected from any location in the spunbond non-woven fabric.
(vi) Using a scanning electron microscope (SEM) (for example, "VHX-D500", manufactured by Keyence Corporation), the cross section is observed and photographed by adjusting a magnification to 100 times using the bonded part in the measurement sample as the center.
(vii) Tangent lines are drawn from the two highest parts of adjacent non-bonded parts (projected parts) and the lengths of the following cross-sectional thicknesses $t_A$ to $t_D$ of the spunbond non-woven fabric ($t_C < t_D$) are measured by a distance between lines parallel to these tangent lines.

$t_A$: Distance between the highest parts of the non-bonded parts (projected parts) from one surface to the other surface
$t_B$: Distance between the highest parts of the bonded parts (recessed part) from one surface to the other surface $t_C$ and $t_D$: Distances between one surface at the highest part of the non-bonded part (projected part) and one surface of the highest part of the bonded part (recessed part) ($t_C < t_D$)

(viii) The ratios of $t_B/t_A$ and $t_C/t_D$ are calculated from the measurement results.
(ix) The arithmetic average values of $t_B/t_A$ and $t_C/t_D$ obtained from each measurement sample are calculated and rounded off to the second decimal place. The obtained values are employed.

The basis weight of the spunbond non-woven fabric in the present invention is preferably in the range of 150 $g/m^2$ or more and 300 $g/m^2$ or less. The spunbond non-woven fabric having a basis weight of 150 $g/m^2$ or more allows the necessary rigidity for pleat to be obtained, which is preferable. On the other hand, the spunbond non-woven fabric having a basis weight of 300 $g/m^2$ or less, preferably 270 $g/m^2$ or less, and more preferably 260 $g/m^2$ or less allows an increase in pressure drop to be reduced and this spunbond non-woven fabric is also preferable from the viewpoint of cost.

The basis weight referred to here is determined by collecting three samples having a length of 50 cm and a width of 50 cm, measuring the mass of each of the samples, converting the average value (g) of the obtained values into a value per unit area (1 $m^2$), and rounding off the obtained value to an integer.

The CV value of the basis weight of the spunbond non-woven fabric according to the present invention is preferably 5% or less. A spunbond non-woven fabric having a CV value of the basis weight of more preferably 4.5% or less and further preferably 4.0% or less allows the collection efficiency to be improved because the non-woven fabric can be denser associated with improvement in uniformity of the non-woven fabric and thus satisfied filter life to be likely to be obtained, which is preferable. On the other hand, in order to secure a certain air permeability of the spunbond non-woven fabric and to extend filter life by reducing pressure drop, the CV value of the basis weight is more preferably 1% or more.

In the present invention, as the CV value (%) of the basis weight of the spunbond non-woven fabric, a value obtained by measuring in accordance with the following procedures is determined to be employed.

(i) 100 small pieces of 5 cm × 5 cm in total are collected from the spunbond non-woven fabric.

(ii) The mass (g) of each small piece is measured and converted into a value per unit area (1 m$^2$).

(iii) The respective average value ($W_{ave}$) and standard deviation ($W_{sdv}$) of the conversion results in (ii) are calculated.

(iv) Based on the results of (i) to (iii), the CV value (%) of the basis weight is calculated in accordance with the following formula, and the obtained CV (%) value of the basis weight is rounded off to the first decimal place.

$$\text{CV Value of basis weight (\%)} = W_{sdv}/W_{ave} \times 100$$

The thickness of the spunbond non-woven fabric in the present invention is preferably 0.50 mm or more and 0.80 mm or less and more preferably 0.51 mm or more and 0.78 mm or less. Setting the thickness to 0.50 mm or more allows rigidity to be improved and the spunbond non-woven fabric suitable for use as a filter to be provided. Setting the thickness of 0.80 mm or less also allows the spunbond non-woven fabric to have excellent handling properties and processing properties as a filter.

In the present invention, as the thickness (mm) of the spunbond non-woven fabric, the value obtained by the measuring the thickness in accordance with the following method is determined to be employed.

(i) The thicknesses of the non-woven fabric are measured at 10 positions in the transverse direction at equal intervals using a thickness meter (for example, "TECLOCK" (registered trademark), SM-114, manufactured by TECLOCK Co.)

(ii) The thickness (mm) of the non-woven fabric is determined by rounding off the above arithmetic average value to the second decimal place.

The apparent density of the spunbond non-woven fabric in the present invention is preferably 0.25 g/cm$^3$ or more and 0.40 g/cm$^3$ or less. The spunbond non-woven fabric having an apparent density of 0.25 g/cm$^3$ or more and 0.40 g/cm$^3$ or less allows the spunbond non-woven fabric to have a dense structure that prevents dust from penetrating into the inside, resulting in excellent dust brush-off performance. The more preferable apparent density range is 0.26 g/cm$^3$ or more and 0.38 g/cm$^3$ or less.

In the present invention, as the apparent density (g/cm$^3$) of the spunbond non-woven fabric, a value obtained in accordance with the following formula from the values of the above basis weight and thickness of the spunbond non-woven fabric is determined to be employed.

$$\text{Apparent density (g/cm}^3\text{)} = \text{Basis weight (g/m}^2\text{)/Thickness (mm)/1000}$$

The air permeability of the spunbond non-woven fabric in the present invention is preferably 10 (cm$^3$/(cm$^2$·sec)) or more and 130 (cm$^3$/(cm$^2$·sec)) or less. The spunbond non-woven fabric having an air permeability of 10 (cm$^3$/(cm$^2$·sec)) or more and preferably 13 (cm$^3$/(cm$^2$·sec)) or more allows an increase in the pressure drop to be reduced. The spunbond non-woven fabric having an air permeability of 130 (cm$^3$/(cm$^2$·sec)) or less and preferably 105 (cm$^3$/(cm$^2$·sec)) or less allows the collection performance as a filter to be excellent because dust is less likely to accumulate inside.

In the present invention, as the air permeability (cm$^3$/(cm$^2$·sec)) of spunbond non-woven fabrics, a value measured in accordance with 6.8.1 "Frazier method" of JIS L1913: 2010 "General non-woven fabrics test method" 6.8 "Air permeability (JIS method)" as follows is determined to be employed.

(i) 10 test specimens having a length of 150 mm and a width of 150 mm are collected in the transverse direction of the spunbond non-woven fabric at equal intervals.

(ii) Each of the test specimens is attached to one end of the cylinder of a testing apparatus, thereafter a suction fan and an air hole are adjusted so that an inclined type barometer indicates a pressure of 125 Pa by means of a lower limit resistor, and the pressure indicated by the vertical type barometer at this time is measured.

(iii) From the measured pressure and the type of the air hole used, the air volume passing through each of the test specimens (cm$^3$/(cm$^2$·sec)) is determined using the conversion table provided with the testing apparatus.

(IV) A value obtained by rounding off an average value of values obtained from the air permeability of the 10 test specimens to an integer is calculated as the air permeability of the spunbond non-woven fabric (cm$^3$/(cm$^2$·sec)).

As described above, the spunbond non-woven fabric according to the present invention can be suitably used as a filter laminated filter material, a filter material for a pleated filter for a dust collector, and a filter for a dust collector because the spunbond non-woven fabric satisfies both dust collection performance and air permeability in balance and has excellent rigidity and pleated workability.

The spunbond non-woven fabric according to the present invention may be suitably used as a filter laminated filter material, a filter material for a pleated filter for a dust collector, and a pleated filter for a dust collector due to its excellent rigidity, laminating properties with a PTFE membrane, and pleated workability. Of these applications, the spunbond non-woven fabric may be suitably used as a filter laminated filter material for a medium air volume pulse-jet type dust collector, a filter material for a pleated filter for a medium air volume pulse-jet type dust collector, and a filter for a medium air volume pulse-jet type dust collector for which the laminating properties with a PTFE membrane that can withstand dust collection at a flow rate of 70 to 250 L/minute when the non-woven fabric alone is used and repeated backwashing are required. Such a filter material for a pleated filter for a dust collector can be obtained, for example, by laminating the above spunbond non-woven fabric with a PTFE membrane to form a filter laminated filter material and thereafter forming the obtained filter laminated filter material into a pleated shape. This filter material for the pleated filter for the dust collector can also be formed into a filter for a cylindrical dust collector, in which the entire filter material is formed into a cylindrical shape and thereafter the upper end and lower end of the cylinder are fixed or a filter for a panel-type dust collector made by fixing the end of the filter material for the pleated filter for the dust collector to the inner wall of the frame material having a square or round shape made of a metal material or a macromolecular resin material.

The pulse-jet type dust collector according to the present invention uses the above pleated filter for a dust collector, and in particular, is a medium air volume pulse-jet type dust collector that performs dust collection under a medium air volume of a flow rate of 70 to 250 L/min and repeated backwashing. In this medium air volume pulse-jet type dust collector, the above filter for a dust collector is used under an atmosphere of a flow rate per filter for the dust collector of 2.0 L/min or more and 4.0 L/min or less and an applied pressure of the processing air per filter for the dust collector of 0.5 MPa or less.

The pulse-jet type dust collector according to the present invention is equipped with at least one filter for a dust collector that filtrates dust from the target facilities for collecting dust and is equipped with a pulse-jet mechanism that brushes off dust attached to the outer surface of the filter by injecting compressed air onto the inner surface of the filter for a dust collector in a pulse-like manner. The pulse-jet mechanism may be an on-line pulse-type mechanism that can operate while a motor for a blower of the dust collector is operating or may be an off-line pulse-type mechanism that can be operated while dust collection is interrupted.

[Examples]

Hereinafter, the present invention will be further described in detail with reference to Examples. The present invention, however, is not interpreted in a limited way by Examples.

[Measurement methods].

Each property value in Examples below was measured in accordance with the following methods. In the measurement of each physical property, however, the methods not specifically described were measured in accordance with the method described above.

(1) Melting point of polyester (°C)

As a differential scanning calorimeter, "Model DSC-2" manufactured by Perkin Elmer Co was used.

(2) Intrinsic viscosity (IV) of polyester

The intrinsic viscosity (IV) of polyester was measured in accordance with the following method.
8 g of a sample was dissolved in 100 mL of ortho-chlorophenol and the relative viscosity $\eta_r$ was determined in accordance with the following formula using an Ostwald viscometer at a temperature of 25°C.

$$\eta_r = \eta/\eta_0 = (t \times d)/(t_0 \times d_0)$$

(where, $\eta$ represents the viscosity of the polymer solution, $\eta_0$ is the viscosity of ortho-chlorophenol, t represents the drop time (seconds) of the solution, d represents the density (g/cm$^3$) of the solution, $t_0$ represents the drop time (second) of ortho-chlorophenol, and $d_0$ represents the density (g/cm$^3$) of ortho-chlorophenol.)

Subsequently, the intrinsic viscosity (IV) was calculated from the relative viscosity $\eta_r$ in accordance with the following formula.

$$\text{Intrinsic Viscosity (IV)} = 0.0242\, \eta_r + 0.2634$$

(3) Cross-sectional thickness of spunbond non-woven fabric (mm)

"VHX-D500" manufactured by Keyence Corporation was used as a scanning electron microscope and measurements were performed in accordance with the method described above.

(4) Thickness of spunbond non-woven fabric (mm) "TECLOCK" (registered trademark) SM-114 manufactured by TECLOCK Corporation was used as the thickness meter.

(5) Apparent density of spunbond non-woven fabric (g/cm$^3$)

The apparent density (g/cm$^3$) of spunbond non-woven fabrics was calculated from the values of the basis weight and thickness of spunbond non-woven fabrics in accordance with the following formula.

$$\text{Apparent density (g/cm}^3) = \text{Basis weight}$$
$$(\text{g/cm}^2)/\text{Thickness (mm)}/1000$$

(6) Air permeability of spunbond non-woven fabric (cm$^3$/(cm$^2$·sec))

Air permeability was measured using "FX3300-III" air permeability tester manufactured by TEXTEST AG, Switzerland.

(7) Bending resistance of spunbond non-woven fabric in machine direction (mN)

Bending resistance was measured using the Gurley Flexibility Tester "GAS-10" manufactured by DAIEI KAGAKU SEIKI MFG. CO., LTD.

(8) Collection efficiency of spunbond non-woven fabric (%)

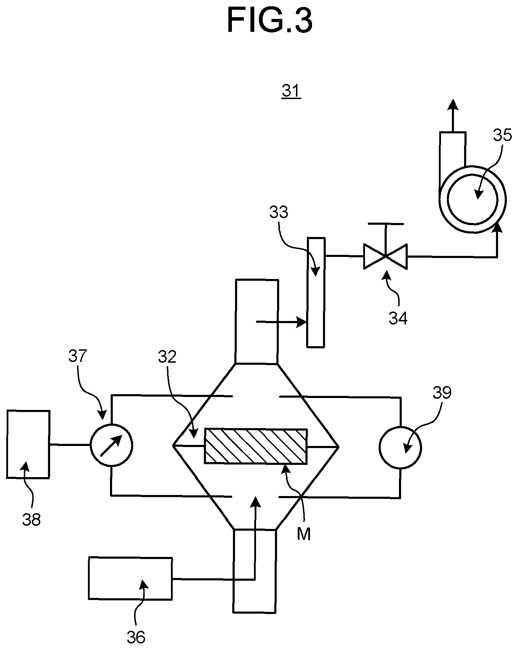

FIG. 3 is a view illustrating the configuration of the test system for performing the collection performance test according to Examples in the present invention. A test system 31 illustrated in FIG. 3 is equipped with a sample holder 32 in which a test sample M is set, a flow meter 33, a flow control valve 34, a blower 35, a dust feeder 36, a switching cock 37, and a particle counter 38. The flow meter 33, the flow control valve 34, the blower 35, and the dust feeder 36 are connected to the sample holder 32. The flow meter 33 is connected to the blower 35 through the flow control valve 34. Dust is supplied to the sample holder 32 from the dust feeder 36 by intake air of the blower 35. The particle counter 38 is connected to the sample holder 32 and the number of dust particles in the upstream side and the number of dust particles in the downstream side of the test sample M can be each measured through the switching cock 37. First, three samples having a size of 15 cm × 15 cm were collected from any part of the non-woven fabric and the collected test sample M was set in the sample holder 32. The evaluation area of the test sample was set to 115 cm$^2$. At the measurement of the collection performance, 10% by weight solution of polystyrene 0.309U (manufactured by Nacalai Tesque, Inc.) was diluted up to 200 times with distilled water and the diluted solution was filled into the dust feeder 36. The air volume was adjusted with the flow control valve 34 so that a velocity passing through the filter was set to 3.0 m/min, the dust concentration was stabilized in the range of 20,000 to 70,000 particles/(2.83 × 10$^{-4}$ m$^3$ (0.01 ft$^3$)), and the number of dust particles in the upstream side and the number of dust particles in the downstream side of the test sample M were each measured using the particle counter 38 (KC-01D, manufactured by Rion Corporation) with respect to the range of a dust particle diameter of 0.3 to 0.5 $\mu$m. The obtained value was substituted into the following formula and the determined value was rounded off to an integer to determine the collection performance (%).

$$\text{Collection performance (\%)} = [1 - (D1/D2)] \times 100$$

Where, D1 is the number of dust particles in downstream (sum of three times) and D2 is the number of dust particles in upstream (sum of three times).

(9) pressure drop (Pa)

The static pressure difference between the upstream and the downstream of the test sample M during the above collection performance measurement was read from a pressure gauge 39 and pressure drop was calculated by rounding off the average value of the values obtained from the three samples to an integer.

(10) Presence or absence of PTFE membrane peeling

A laminated non-woven fabric made by laminating a PTFE membrane to the spunbond non-woven fabric was cut into a piece having a size of 10 cm × 10 cm and compressed air was applied at 0.25 MPa from a distance of 10 cm to check the presence or absence of the PTFE membrane peeling by visual inspection.

(11) Pleated formability and presence or absence of PTFE membrane floating during pleat forming

A 100 mm sample of a laminated non-woven fabric formed by laminating the PTFE membrane to the spunbond non-woven fabric was subjected to pleat forming using a pleating machine at a pitch of 25 mm, and the pleated formability and PTFE membrane floating thereof were visually checked and evaluated at the following two levels.

(Pleated formability)

∘: Pleats have sharp angles and are uniform
×: Pleats are nonuniform or cannot be formed
(Presence or absence of PTFE membrane floating during pleat formation)
Presence: PTFE membrane is floating on the bonded parts of folds
Absence: PTFE membrane is not floating on the bonded part of folds

(12) Basis weight of spunbond non-woven fabric (g/m$^2$)

The basis weight of the spunbond non-woven fabric was calculated in accordance with the method described above.

(13) CV value of basis weight of spunbond non-woven fabric (%)

The CV value of the basis weight of the spunbond non-woven fabric was calculated in accordance with the method described above.

(14) Average single fiber diameter of thermoplastic continuous filament ($\mu$m)

The average single fiber diameter of the thermoplastic continuous filament was calculated in accordance with the method described above using a scanning electron microscope "VHX-D500" manufactured by Keyence Corporation.

[Used resins]

Subsequently, the resins used in Examples and Comparative Examples are as follows.

Polyester-based resin A: Polyethylene terephthalate (PET) dried to 50 ppm by mass or less of a moisture content and having an intrinsic viscosity (IV) of 0.65 and a melting point of 260°C
Polyester-based resin B: Copolymer polyethylene terephthalate (CO-PET) dried to 50 ppm by mass or less of a moisture content and having an intrinsic viscosity (IV) of 0.64, an isophthalic acid copolymerization ratio of 11% by mol, and a melting point of 230°C

[Example 1]

Polyester-based resin A described above and Polyester-based resin B described above were melted at temperatures of 295°C and 280°C, respectively. Thereafter, Polyester-based resin A serving as the core component and Polyester-based resin B serving as the sheath component were spun from fine holes at a mass ratio of sheath:core of 80:20 at a spinnerret temperature of 300°C and thereafter filaments having a circular cross-sectional shape was spun at a spinning speed of 4,400 m/minute by an air sucker. The spun filament was deposited on a moving net conveyor by regulating the fiber arrangement with an opening plate to collect a fiber web made of the fiber having an average single fiber diameter of 14.8 $\mu$m. The collected fiber web was set along calender rolls made of a pair of flat rolls in an S-shape under conditions of a temperature of 140°C and a line pressure of 50 kg/cm. Subsequently, the fiber web was bonded by embossing rolls made of a pair of engraved rolls having a bonding area ratio of 18% and an area per bonded part of 0.7 mm$^2$ under conditions of a temperature of 205°C at both the upper roll and the lower roll and a linear pressure of 70 kg/cm to give a spunbond non-woven fabric having a basis weight of 260 g/m$^2$. The sheet cross-sectional thicknesses of 1 - $t_B/t_A$ and $t_C/t_D$ of the obtained spunbond non-woven fabric were 0.61 and 0.57, respectively. The sheet thickness was 0.51 mm and the bending resistance in the machine direction was 25 mN. The results are listed in Table 1.

Table 1

| | | | Unit | Example 1 | Example 2 | Example 3 | Example 4 | Example 5 | Example 6 | Example 7 |
|---|---|---|---|---|---|---|---|---|---|---|
| Raw materials | First component | Kind of resin | - | Polyester-based resin A | Polyester-based resin A | Polyester-based resin A | Polyester-based resin A | Polyester-based resin A | Polyester-based resin A | Polyester-based resin A |
| | Second component | Kind of resin | - | Polyester-based resin B | Polyester-based resin B | Polyester-based resin B | Polyester-based resin B | Polyester-based resin B | Polyester-based resin B | Polyester-based resin B |
| Fiber | Fiber | Core/sheath ratio — Core part/-sheath part | %/% | 80/20 | 80/20 | 80/20 | 80/20 | 80/20 | 80/20 | 80/20 |
| | | Average single fiber diameter | µm | 14.8 | 14.8 | 14.8 | 14.8 | 14.8 | 25.4 | 14.2 |
| Bonding | | Setting along rolls | | Presence | Presence | Presence | Absence | Presence | Presence | Presence |
| | | Embossing roll temperature — Upper roll/-Lower roll | °C | 205/205 | 180/180 | 180/210 | 210/200 | 205/205 | 205/205 | 205/205 |
| | | Embossing roll line pressure | kg/cm | 70 | 70 | 70 | 70 | 70 | 70 | 70 |
| | | Ratio of bonding area | % | 18 | 18 | 18 | 15 | 6 | 18 | 18 |
| | | Area per bonded part | mm$^2$ | 0.7 | 0.7 | 0.7 | 0.7 | 0.5 | 0.7 | 0.7 |
| Non-woven fabric | | Sheet cross-section thickness ($1 - t_B/t_A$) | - | 0.61 | 0.54 | 0.58 | 0.61 | 0.79 | 0.52 | 0.63 |
| | | Sheet cross-section thickness ($t_C/t_D$) | - | 0.37 | 0.55 | 0.65 | 0.37 | 0.65 | 0.58 | 0.57 |
| | | Basis weight | g/m$^2$ | 260 | 260 | 260 | 260 | 260 | 260 | 260 |
| | | CV value of basis weight | % | 3.3 | 3.3 | 3.3 | 3.2 | 3.5 | 4.3 | 3.1 |
| | | Sheet thickness | mm | 0.51 | 0.82 | 0.73 | 0.62 | 1.20 | 0.93 | 0.54 |
| | | Bending resistance (MD direction) | mN | 25 | 28 | 31 | 25 | 39 | 37 | 24 |
| | | Apparent density | g/cm$^3$ | 0.51 | 0.32 | 0.36 | 0.42 | 0.22 | 0.28 | 0.48 |
| | | Air permeability | cm$^3$/(cm$^2$·sec) | 10 | 12 | 10 | 10 | 20 | 18 | 9 |
| | | Collection efficiency | % | 52 | 54 | 51 | 53 | 56 | 41 | 59 |
| | | Pressure drop | Pa | 50 | 46 | 50 | 50 | 28 | 33 | 52 |

(continued)

| | Unit | Example 1 | Example 2 | Example 3 | Example 4 | Example 5 | Example 6 | Example 7 |
|---|---|---|---|---|---|---|---|---|
| PTFE Membrane laminated non-woven fabric | Presence or absence of PTFE membrane peeling | | Absence | Absence | Absence | Absence | Absence | Absence | Absence |
| | Pleated formability | | ○ | ○ | ○ | ○ | ○ | ○ | ○ |
| | Presence or absence of PTFE membrane floating during pleat formation | | Absence | Absence | Absence | Absence | Absence | Absence | Absence |

[Example 2]

A spunbond non-woven fabric having a basis weight of 260 g/m$^2$ was obtained under the same conditions as the conditions in Example 1 except that in bonding, the temperature at both upper and lower embossing rolls was changed from 205°C to 180°C. The sheet cross-sectional thicknesses of 1 - $t_B/t_A$ and $t_C/t_D$ of the obtained spunbond non-woven fabric were 0.54 and 0.55, respectively. The sheet thickness was 0.82 mm and the bending resistance in the machine direction was 28 mN. The results are listed in Table 1.

[Example 3]

A spunbond non-woven fabric having a basis weight of 260 g/m$^2$ was obtained under the same conditions as the conditions in Example 1 except that in bonding, the upper embossing roll temperature and the lower embossing roll temperature were changed from temperatures of 205°C to 180°C and 210°C, respectively. The sheet cross-sectional thicknesses of 1 - $t_B/t_A$ and $t_C/t_D$ of the obtained spunbond non-woven fabric were 0.58 and 0.65, respectively. The sheet thickness was 0.73 mm and the bending resistance in the machine direction was 31 mN. The results are listed in Table 1.

[Example 4]

A spunbond non-woven fabric having a basis weight of 260 g/m$^2$ was obtained under the same conditions as the conditions in Example 1 except that in bonding, the collected web was not set along a pair of calender rolls, and the upper and lower embossing rolls were changed from the embossing rolls made of a pair of engraved rolls having a bonding area ratio of 18% and an area per bonded part of 0.7 mm$^2$ to embossing rolls made of a pair of engraved rolls having a bonding area ratio of 15% and an area per bonded part of 0.5 mm$^2$ to set the upper roll temperature and the lower roll temperature to 210°C and 200°C, respectively. The sheet cross-sectional thicknesses of 1 - $t_B/t_A$ and $t_C/t_D$ of the obtained spunbond non-woven fabric were 0.61 and 0.37, respectively. The sheet thickness was 0.62 mm and the bending resistance in the machine direction was 25 mN. The results are listed in Table 1.

[Example 5]

A spunbond non-woven fabric having a basis weight of 260 g/m$^2$ was obtained under the same conditions as the conditions in Example 1 except that in bonding, the upper and lower embossing rolls were changed from the embossing rolls made of a pair of engraved rolls having a bonding area ratio of 18% and an area per bonded part of 0.7 mm$^2$ to embossing rolls made of a pair of engraved rolls having a bonding area ratio of 6% and an area per bonded part of 0.5 mm$^2$. The sheet cross-sectional thicknesses of 1 - $t_B/t_A$ and $t_C/t_D$ of the obtained spunbond non-woven fabric were 0.79 and 0.65, respectively. The sheet thickness was 1.20 mm and the bending resistance in the machine direction was 39 mN. The results are listed in Table 1.

[Example 6]

A spunbond non-woven fabric having a basis weight of 260 g/m$^2$ was obtained under the same conditions as the conditions in Example 1 except that the discharge volume and the spinning speed were changed so that the average single fiber diameter was 25.4 $\mu$m and the speed of the net conveyor was changed so that the basis weight was the same as the basis weight in Example 1. The sheet cross-sectional thicknesses of 1 - $t_B/t_A$ and $t_C/t_D$ of the obtained spunbond non-woven fabric were 0.52 and 0.58, respectively. The sheet thickness was 0.93 mm and the bending resistance in the machine direction was 37 mN. The results are listed in Table 1.

[Example 7]

A spunbond non-woven fabric having a basis weight of 260 g/m$^2$ was obtained under the same conditions as the conditions in Example 1 except that the discharge volume and the spinning speed were changed so that the average single fiber diameter was 14.2 $\mu$m and the speed of the net conveyor was changed so that the basis weight was the same as the basis weight in Example 1. The sheet cross-sectional thicknesses of 1 - $t_B/t_A$ and $t_C/t_D$ of the obtained spunbond non-woven fabric were 0.63 and 0.57, respectively. The sheet thickness was 0.54 mm and the bending resistance in the machine direction was 24 mN. The results are listed in Table 1.

The properties of the obtained non-woven fabrics are as listed in Table 1. All of the spunbond non-woven fabrics in Examples 1 to 7 had a bending resistance in the machine direction of 20 mN or more, a CV value of the basis weight of 5.0% or less, and a pressure drop of 50 Pa or less and had excellent rigidity and uniformity of the basis weight, and thus exhibited excellent properties as the spunbond non-woven fabrics. In addition, in the laminating property of these spunbond non-woven fabrics and PTFE membranes, no peeling from the membrane occurred and the pleated workability was also excellent.

[Comparative Example 1]

A spunbond non-woven fabric having a basis weight of 260 g/m$^2$ was obtained under the same conditions as the conditions in Example 1 except that in bonding, the upper and lower embossing rolls were changed from the embossing rolls made of a pair of engraved rolls having a bonding area ratio of 18% and an area per bonded part of 0.7 mm$^2$ to embossing rolls made of a pair of engraved rolls having a bonding area ratio of 10% and an area per bonded part of 1.6 mm$^2$ to set the respective temperatures of the upper and lower rolls to 240°C. The sheet cross-sectional thicknesses of $1 - t_B/t_A$ and $t_C/t_D$ of the obtained spunbond non-woven fabric were 0.36 and 0.25, respectively. The sheet thickness was 0.51 mm and the bending resistance in the machine direction was 18 mN. The results are listed in Table 2.

Table 2

| | | | Unit | Comparative Example 1 | Comparative Example 2 | Comparative Example 3 | Comparative Example 4 | Comparative Example 5 |
|---|---|---|---|---|---|---|---|---|
| Raw materials | First component | Kind of resin | - | Polyester-based resin A | Polyester-based resin A | Polyester-based resin A | Polyester-based resin A | Polyester-based resin A |
| | Second component | Kind of resin | - | Polyester-based resin A | Polyester-based resin B | Polyester-based resin B | Polyester-based resin B | Polyester-based resin B |
| Fiber | Core/sheath ratio | Core part/sheath part | %/% | 80/20 | 80/20 | 80/20 | 80/20 | 80/20 |
| | Fiber | Average single fiber diameter | μm | 14.8 | 14.8 | 14.8 | 29.2 | 14.8 |
| Bonding | Setting along rolls | | | Presence | Presence | Presence | Presence | Absence |
| | Embossing roll temperature | Upper roll/Lower roll | °C | 240/240 | 205/205 | 205/205 | 205/205 | 205/205 |
| | Embossing roll line pressure | | kg/cm | 70 | 70 | 70 | 70 | 70 |
| | Ratio of bonding area | | % | 10 | 3 | 24 | 18 | 18 |
| | Area per bonded part | | mm$^2$ | 1.6 | 0.5 | 0.5 | 1.6 | 1.6 |
| Non-woven fabric | Sheet cross-section thickness ($1 - t_B/t_A$) | | - | 0.36 | 0.83 | 0.61 | 0.45 | 0.48 |
| | Sheet cross-section thickness ($t_C/t_D$) | | - | 0.25 | 0.66 | 0.50 | 0.57 | 0.67 |
| | Basis weight | | g/m$^2$ | 260 | 260 | 260 | 260 | 260 |
| | CV value of basis weight | | % | 3.5 | 3.5 | 3.3 | 5.2 | 3.3 |
| | Sheet thickness | | mm | 0.51 | 1.30 | 0.62 | 1.21 | 0.43 |
| | Bending resistance (MD direction) | | mN | 18 | 45 | 17 | 43 | 24 |
| | Apparent density | | g/cm$^3$ | 0.51 | 0.20 | 0.42 | 0.21 | 0. 60 |
| | Air permeability | | cm$^3$/ (cm$^2$·sec) | 20 | 22 | 8 | 20 | 9 |
| | Collection efficiency | | % | 47 | 56 | 43 | 40 | 44 |
| | Pressure drop | | Pa | 28 | 24 | 54 | 28 | 52 |
| PTFE Membrane laminated non-woven fabric | Presence or absence of PTFE membrane peeling | | | Absence | Presence | Absence | Presence | Presence |
| | Pleated formability | | | × | ○ | × | ○ | ○ |
| | Presence or absence of PTFE membrane floating during pleat formation | | | Absence | Presence | Absence | Presence | Presence |

EP 4 083 295 B1

[Comparative Example 2]

A spunbond non-woven fabric having a basis weight of 260 g/m$^2$ was obtained under the same conditions as the conditions in Example 1 except that in bonding, the upper and lower embossing rolls were changed from the embossing rolls made of a pair of engraved rolls having a bonding area ratio of 18% and an area per bonded part of 0.7 mm$^2$ to embossing rolls made of an engraved roll having a bonding area ratio of 3% and an area per bonded part of 0.5 mm$^2$ and a flat roll. The sheet cross-sectional thicknesses of 1 - $t_B/t_A$ and $t_C/t_D$ of the obtained spunbond non-woven fabric were 0.83 and 0.66, respectively. The sheet thickness was 1.30 mm and the bending resistance in the machine direction was 45 mN. The results are listed in Table 2.

[Comparative Example 3]

A spunbond non-woven fabric having a basis weight of 260 g/m$^2$ was obtained by bonding under the same conditions as the conditions in Example 1 except that the upper and lower embossing rolls were changed from the embossing rolls made of a pair of engraved rolls having a bonding area ratio of 18% and an area per bonded part of 0.7 mm$^2$ to embossing rolls made of a pair of engraved rolls having a bonding area ratio of 24% and an area per bonded part of 0.5 mm$^2$. The sheet cross-sectional thicknesses of 1 - $t_B/t_A$ and $t_C/t_D$ of the obtained spunbond non-woven fabric were 0.61 and 0.50, respectively. The sheet thickness was 0.62 mm and the bending resistance in the machine direction was 17 mN. The results are listed in Table 2.

[Comparative Example 4]

A spunbond non-woven fabric having a basis weight of 260 g/m$^2$ was obtained under the same conditions as the conditions in Example 1 except that the discharge volume and the spinning speed were changed so that the average single fiber diameter was 29.2 μm, and the speed of the net conveyor was changed so that the fiber thickness was the same as in Example 1. The sheet cross-sectional thicknesses of 1 - $t_B/t_A$ and $t_C/t_D$ of the obtained spunbond non-woven fabric were 0.45 and 0.57, respectively. The sheet thickness was 1.21 mm and the bending resistance in the machine direction was 43 mN. The results are listed in Table 2.

[Comparative Example 5]

A spunbond non-woven fabric having a basis weight of 260 g/m$^2$ was obtained under the same conditions as the conditions in Example 1 except that the collected web was not set along an S-shape on a pair of calender rolls. The sheet cross-sectional thicknesses of 1 - $t_B/t_A$ and $t_C/t_D$ of the obtained spunbond non-woven fabric were 0.48 and 0.67, respectively. The sheet thickness was 0.43 mm and the bending resistance in the machine direction was 24 mN. The results are listed in Table 2.

The properties of the obtained non-woven fabrics are as listed in Table 2. The non-woven fabric in Comparative Example 1 had a thinner sheet cross-sectional thickness (1 - $t_B/t_A$), lower bending resistance, and inferior pleated formability. The non-woven fabrics in Comparative Examples 2 and 4 had high bending resistance and the thus the laminating properties between these spunbond non-woven fabrics and the PTFE membranes was inferior. The non-woven fabric in Comparative Example 3 had lower bending resistance and thus had inferior pleated workability. The non-woven fabric in Comparative Example 5 had a thinner sheet cross-sectional thickness ($t_C/t_D$) and thus the laminating property between the spunbond non-woven fabric and the PTFE membrane was inferior.

Industrial Applicability

The spunbond non-woven fabrics, filter laminated filter materials, filter materials for dust collector pleated filters, dust collector pleated filters, and medium airflow pulse-jet type dust collectors according to the present invention are preferably used due to excellent laminating properties with a PTFE membrane and pleated workability and high rigidity. The scope of applications, however, is not limited thereto.

Reference Signs List

11    Projected part
12    Recessed part
21    Filter material for pleated filter for dust collector

22  Mountain section
23  Valley section
24  Arrow indicating machine direction (dashed arrow)
25  Arrow indicating transverse direction (dashed arrow)
M   Test sample
31  Testing system
32  Sample holder
33  Flow meter
34  Flow control valve
35  Blower
36  Dust feeder
37  Switching cock
38  Particle counter
39  Pressure gauge

**Claims**

1.  A spunbond non-woven fabric comprising a thermoplastic continuous filament including a high melting point component and a low melting point component, the spunbond non-woven fabric being made by partially being bonded, wherein

    the spunbond non-woven fabric includes a nonbonded projected part and a bonded recessed part,
    bending resistance in a machine direction of the spunbond non-woven fabric is 20 mN or more and 40 mN or less, wherein the bending resistance is determined to be a value obtained by the procedures in accordance with JIS L1913: 2010 "Test methods for nonwovens", 6.7 "Bending resistance (JIS method and ISO method)" 6.7.4 "Gurley Method (JIS method)" as set out in the description, and
    in a non-woven fabric cross-section, a thickness from one surface to another surface of the projected part is determined to be $t_A$, a thickness from one surface to another surface of the recessed part is determined to be $t_B$, and respective distances from one surface of the projected part to one surface of the recessed part are determined to be $t_C$ and $t_D$ ($t_C < t_D$), and the spunbond non-woven fabric has a relation represented by formulas (1) and (2) below:

    $$0.5 \leq 1 - t_B/t_A < 1.0 \tag{1}$$

    $$0.35 \leq t_C/t_D \leq 0.65 \tag{2}$$

    wherein the thickness is measured by the method of the description.

2.  The spunbond non-woven fabric according to claim 1, wherein a CV value of a basis weight is 5% or less, wherein the CV value is measured by the method of the description.

3.  The spunbond non-woven fabric according to claim 1 or 2, wherein a ratio of a bonding area of the recessed part is 5% or more and 20% or less, wherein the ratio of the bonding area is measured by the method of the description.

4.  The spunbond non-woven fabric according to any of claims 1 to 3, wherein an average single fiber diameter of the thermoplastic continuous filament is 12 $\mu$m or more and 26 $\mu$m or less, wherein the average single fiber diameter is measured by the method of the description.

5.  The spunbond non-woven fabric according to any one of claims 1 to 4, wherein the spunbond non-woven fabric has a relation represented by formulas (1) and (2) below:

    $$0.5 \leq 1 - t_B/t_A < 1.0 \tag{1}$$

    $$0.35 < t_C/t_D \leq 0.65 \tag{2}.$$

6.  The spunbond non-woven fabric according to any one of claims 1 to 5, wherein the spunbond non-woven fabric has a relation represented by formulas (1) and (2) below:

$$0.5 \leq 1 - t_B/t_A < 1.0 \hspace{4cm} (1)$$

$$0.35 < t_C/t_D < 0.65 \hspace{4cm} (2).$$

7.  A filter laminated filter material made by laminating a PTFE membrane to the spunbond non-woven fabric according to any of claims 1 to 6.

8.  A filter material for a pleated filter for a dust collector, the filter material being made by using the filter laminated filter material according to claim 7.

9.  A pleated filter for a dust collector, the pleated filter being made by using the filter material for a pleated filter for dust collector according to claim 8.

10. A medium air volume pulse-jet type dust collector using the pleated filter for a dust collector according to claim 9.


**Patentansprüche**

1.  Spinnvliesstoff, umfassend ein thermoplastisches kontinuierliches Filament, einschließlich einer Komponente mit hohem Schmelzpunkt und einer Komponente mit niedrigem Schmelzpunkt, wobei der Spinnvliesstoff dadurch hergestellt ist, dass er teilgespinnt wird, wobei

    der Spinnvliesstoff einen nichtgesponnenen hervorstehenden Teil und einen gesponnenen vertieften Teil umfasst,
    wobei die Biegefestigkeit in einer Maschinenrichtung des Spinnvliesstoffs 20 mN oder mehr und 40 mN oder weniger beträgt, wobei die Biegefestigkeit als ein Wert bestimmt wird, der durch die Abläufe gemäß JIS L1913: 2010 "Test methods for nonwovens", 6.7 "Bending Resistance (JIS method and ISO method)" 6.7.4, "Gurley Method (JIS Method)" wie in der Beschreibung dargelegt erhalten wird, und
    wobei in einem Vliesstoffquerschnitt eine Dicke von einer Oberfläche zu einer weiteren Oberfläche des hervorstehenden Teils als $t_A$ bestimmt wird, eine Dicke von einer Oberfläche zu einer weiteren Oberfläche des vertieften Teils als $t_B$ bestimmt wird und entsprechende Abstände von einer Oberfläche des hervorstehenden Teils zu einer Oberfläche des vertieften Teils als $t_C$ und $t_D$ ($t_C < t_D$) bestimmt werden und der Spinnvliesstoff eine Beziehung aufweist, die durch die nachstehenden Formeln (1) und (2) dargestellt ist:

$$0{,}5 \leq 1 - t_B/t_A < 1{,}0 \hspace{3cm} (1)$$

$$0{,}35 \leq t_C/t_D \leq 0{,}65 \hspace{3cm} (2),$$

    worin die Dicke durch das Verfahren der Beschreibung gemessen wird.

2.  Spinnvliesstoff nach Anspruch 1, wobei ein CV-Wert eines Basisgewichts 5 % oder weniger beträgt, wobei der CV-Wert durch das Verfahren der Beschreibung gemessen wird.

3.  Spinnvliesstoff nach Anspruch 1 oder 2, wobei ein Verhältnis einer Spinnfläche des vertieften Teils 5 % oder mehr und 20 % oder weniger beträgt, wobei das Verhältnis der Spinnfläche durch das Verfahren der Beschreibung gemessen wird.

4.  Spinnvliesstoff nach einem der Ansprüche 1 bis 3, wobei ein mittlerer Einzelfaserdurchmesser des thermoplastischen kontinuierlichen Filaments 12 $\mu$m oder mehr und 26 $\mu$m oder weniger beträgt, wobei der mittlere Einzelfaserdurchmesser durch das Verfahren der Beschreibung gemessen wird.

5.  Spinnvliesstoff nach einem der Ansprüche 1 bis 4, wobei der Spinnvliesstoff eine Beziehung aufweist, die durch die nachstehenden Formeln (1) und (2) dargestellt ist:

$$0,5 \le 1 - t_B/t_A < 1,0 \qquad (1)$$

$$0,35 < t_C/t_D \le 0,65 \qquad (2).$$

6. Spinnvliesstoff nach einem der Ansprüche 1 bis 5, wobei der Spinnvliesstoff eine Beziehung aufweist, die durch die nachstehenden Formeln (1) und (2) dargestellt ist:

$$0,5 \le 1 - t_B/t_A < 1,0 \qquad (1)$$

$$0,35 < t_C/t_D < 0,65 \qquad (2).$$

7. Filterlaminiertes Filtermaterial, hergestellt durch Laminieren einer PTFE-Membran auf einen Spinnvliesstoff nach einem der Ansprüche 1 bis 6.

8. Filtermaterial für einen Faltenfilter für ein Staubsammelelement, wobei das Filterelement unter Verwendung eines filterlaminierten Filtermaterials nach Anspruch 7 hergestellt wird.

9. Faltenfilter für ein Staubsammelelement, wobei der Faltenfilter unter Verwendung eines Filtermaterials für einen Faltenfilter für ein Staubsammelelement nach Anspruch 8 hergestellt wird.

10. Staubsammelelement vom Mittelluftvolumen-Impulsstrahltyp unter Verwendung eines Faltenfilters für ein Staubsammelelement nach Anspruch 9.

**Revendications**

1. Tissu non tissé filé-lié comprenant un filament continu thermoplastique incluant un composant à point de fusion élevé et un composant à point de fusion bas, le tissu non tissé filé-lié étant fabriqué en étant partiellement fondu, dans lequel

le tissu non-tissé filé-lié inclut une partie convexe qui n'est pas fondue et une partie concave qui est fondue, la résistance à la flexion dans la direction de machine du tissu non tissé filé-lié est de 20 mN ou plus à 40 mN ou moins, dans lequel la résistance à la flexion est déterminée comme étant une valeur obtenue par les procédures conformément à la norme JIS L1913 : 2010 « Test methods for nonwovens (Procédés d'essai pour les non-tissés) », 6.7 « Bending resistance (Résistance à la flexion) (Procédé JIS et Procédé ISO) », 6.7.4 « Gurley method (Procédé Gurley) (Procédé JIS) » comme indiqué dans la description, et
dans une section transversale de tissu non tissé, une épaisseur d'une surface à une autre surface de la partie convexe est déterminée comme étant $t_A$, une épaisseur d'une surface à une autre surface de la partie concave est déterminée comme étant $t_B$, et des distances respectives d'une surface de la partie convexe à une surface de la partie concave sont déterminées comme étant $t_C$ et $t_D$ ($t_C < t_D$), et le tissu non tissé filé-lié présente une relation représentée par les formules (1) et (2) ci-dessous :

$$0,5 \le 1 - t_B/t_A < 1,0 \qquad (1)$$

$$0.35 \le t_C/t_D \le 0.65 \qquad (2)$$

dans lequel l'épaisseur est mesuré par le procédé décrit dans la description.

2. Tissu non tissé filé-lié selon la revendication 1, dans lequel une valeur CV d'un poids de base est de 5 % ou moins, dans lequel la valeur CV est mesurée par le procédé de la description.

3. Tissu non tissé filé-lié selon la revendication 1 ou 2, dans lequel un rapport d'une surface de liaison de la partie convexe est de 5 % ou plus et de 20 % ou moins, dans lequel le rapport de la surface de liaison est mesuré par le procédé de la description.

**4.** Tissu non tissé filé-lié selon l'une quelconque des revendications 1 à 3, dans lequel un diamètre de fibre unique moyen du filament continu thermoplastique est de 12 $\mu$m ou plus et de 26 $\mu$m ou moins, dans lequel le diamètre de fibre unique moyen est mesuré par le procédé de la description.

**5.** Tissu non-tissé filé-lié selon l'une quelconque des revendications 1 à 4, dans lequel le tissu non-tissé filé-lié présente une relation représentée par les formules (1) et (2) ci-dessous :

$$0,5 \leq 1 - t_B/t_A < 1,0 \qquad\qquad (1)$$

$$0,35 < t_C/t_D \leq 0,65 \qquad\qquad (2).$$

**6.** Tissu non-tissé filé-lié selon l'une quelconque des revendications 1 à 5, dans lequel le tissu non-tissé filé-lié présente une relation représentée par les formules (1) et (2) ci-dessous :

$$0,5 \leq 1 - t_B/t_A < 1,0 \qquad\qquad (1)$$

$$0,35 < t_C/t_D < 0,65 \qquad\qquad (2).$$

**7.** Matériau filtrant à stratifié de filtre fabriqué en stratifiant une membrane de PTFE sur le tissu non-tissé filé-lié selon l'une quelconque des revendications 1 à 6.

**8.** Matériau filtrant pour un filtre plissé pour un collecteur de poussière, le matériau filtrant étant fabriqué en utilisant le matériau filtrant à stratifié de filtre selon la revendication 7.

**9.** Filtre plissé pour un collecteur de poussière, le filtre plissé étant fabriqué en utilisant le matériau filtrant pour un filtre plissé pour un collecteur de poussière selon la revendication 8.

**10.** Collecteur de poussière de type à jet d'impulsion à volume d'air médian utilisant le filtre plissé pour un collecteur de poussière selon la revendication 9.

# FIG.1

# FIG.2

# FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5422874 B
- JP 5298803 B
- JP 4522671 B
- JP 2017127832 A
- JP H09192426 A